(19) Europäisches Patentamt / European Patent Office / Office européen des brevets

(11) **EP 4 354 398 B1**

(12) **EUROPEAN PATENT SPECIFICATION**

(45) Date of publication and mention of the grant of the patent:
**11.03.2026  Bulletin 2026/11**

(21) Application number: **23200707.0**

(22) Date of filing: **29.09.2023**

(51) International Patent Classification (IPC):
*G06T 7/73* (2017.01)

(52) Cooperative Patent Classification (CPC):
**G06T 7/75;** G06T 2207/20084; G06T 2207/30196; G06T 2207/30268

(54) **METHOD AND SYSTEM OF POSE ESTIMATION**

VERFAHREN UND SYSTEM ZUR POSENSCHÄTZUNG

PROCÉDÉ ET SYSTÈME D'ESTIMATION DE POSE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **04.10.2022  GB 202214554**

(43) Date of publication of application:
**17.04.2024  Bulletin 2024/16**

(73) Proprietor: **AUMOVIO Germany GmbH**
**60488 Frankfurt am Main (DE)**

(72) Inventors:
• **Dr. Sanaei, Roozbeh**
**339780 Singapore (SG)**
• **Meier, Matthias Horst**
**339780 Singapore (SG)**
• **Das, Mithun**
**339780 Singapore (SG)**
• **Li, Lei**
**339780 Singapore (SG)**
• **Wong, VunPin**
**339780 Singapore (SG)**
• **Sanyal, Saptak**
**339780 Singapore (SG)**

(74) Representative: **Aumovio Corporation**
**AUMOVIO Germany GmbH**
**Taunusstraße 36**
**80807 München (DE)**

(56) References cited:
KR-A- 20140 114 741     US-A1- 2020 327 465

• CAO ZHE ET AL: "OpenPose: Realtime Multi-Person 2D Pose Estimation using Part Affinity Fields", IEEE TRANSACTIONS ON PATTERN ANALYSIS AND MACHINE INTELLIGENCE, 30 May 2019 (2019-05-30), pages 1 - 14, XP055849326, Retrieved from the Internet <URL:https://arxiv.org/pdf/1812.08008.pdf> [retrieved on 20211008]

**Description**

TECHNICAL FIELD

The invention relates generally to pose estimation, and more specifically to a system and method for pose estimation by generating combinations of candidate keypoint positions and further incorporating spatial, physical and temporal constraints.

BACKGROUND

Pose estimation in vehicles is difficult and are generally more likely to exhibit lower accuracy relative to the free space due to the presence of occluding objects in the vehicle, such as steering wheels and chairs. Existing prior art for human pose estimation utilize deep learning-based pose-estimation algorithms. Such algorithms are generally trained in free space, which may not be accurate for pose estimation in vehicles. Although some algorithms are trained inside a default vehicle, there may be errors when generalizing to other vehicles as different vehicles have different configurations, sizes, and shapes.

KR 20140114741 A discloses an apparatus and a method for human pose estimation using a Minimum Energy Skeleton Scan (MESS) skeleton for a depth image representing a human body object and a (body part pixel label ring) PIXLA skeleton to identify at least one candidate body part of the human body object. The human pose estimation apparatus performs part assumption for the body parts and determines the human pose by evaluating the pose estimation according to the evaluation criteria for the pose. However, the disclosure of KR 20140114741 does not address problem cause by presence of occluding objects in the vehicle.

SUMMARY

It is the object of the invention to provide improved methods and systems for human pose estimation.

The object is achieved by the subject-matter of the independent claims. Preferred embodiments are subject-matter of the dependent claims.

It shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

To solve the above technical problems, the present invention provides a computer-implemented method for pose estimation, the method comprising:

receiving at least one image frame captured by an imaging device, wherein the imaging device is arranged to image at least one subject;

determining one or more candidate positions for each of a plurality of human keypoints, wherein each candidate position is associated with a probability that a human keypoint is located at such position;

generating one or more combinations of human keypoints based on the determined one or more candidate positions; and

determining a pose of each of the at least one subject based at least on the one or more generated combinations of human keypoints.

The computer-implemented method of the present invention is advantageous over known methods as the identification of one or more candidate positions, generation of one or more combinations of human keypoints, and determining the pose of each of the at least one subject based on the combinations of human keypoints increases the accuracy of pose estimation as the location of each human keypoint is determined in context as a combination of human keypoints instead of individual keypoints in isolation.

A preferred method of the present invention is a computer-implemented method as described above, wherein determining one or more candidate positions of a plurality of human keypoints comprises:

generating heatmaps for each of the plurality of human keypoints, wherein each heatmap represents a probability that a human keypoint occurs at each pixel location;

identifying one or more peaks in each generated heatmap; and

determining coordinates of each identified peak, wherein each coordinate represents a candidate position of the corresponding human keypoint.

The above-described aspect of the present invention has the advantage that one or more candidate positions of each human keypoint is identified and then accounted for in subsequent steps to ensure a higher accuracy of the determined pose.

A preferred method of the present invention is a computer-implemented method as described above or as described above as preferred, wherein determining a pose of each of the at least one subject is further based on at least one constraint affecting the pose of each of the at least one subject, wherein the at least one constraint preferably comprises at least one of: limb length, limb angle, and limb movement.

The above-described aspect of the present invention has the advantage that the incorporation of at least one constraint affecting the each of the at least one subject increases the accuracy of pose estimation by ensuring that such physical real-life constraints are accounted for when determining a pose of a subject. The incorporation of at least one constraint affecting the each of the at least one subject may also be particularly advantageous in situation or environments with occluding vehicles, such as a vehicle that comprises several occluding objects such as steering wheels, seatbelts, and seats. The above-described aspect is also advantageous as each of the at least one constraint listed accounts for one or more of a physical, spatial and/or temporal constraint that affects the pose that each subject is able to take.

A preferred method of the present invention is a computer-implemented method as described above or as described above as preferred, wherein the at least one constraint comprises limb movement, wherein limb movement is based on a maximum movement of each limb between image frames.

The above-described aspect of the present invention has the advantage that limb movement is a constraint that affects the pose a subject that take within a restricted space, such as within a vehicle cabin.

A preferred method of the present invention is a computer-implemented method as described above or as described above as preferred, wherein the at least one constraint comprises at least one generic constraint, wherein the generic constraint is preferably determined based on a dataset comprising a general or specific population.

The above-described aspect of the present invention has the advantage that the pose of each subject may be estimated without prior knowledge of the specific constraints that affect each of the at least one subject.

A preferred method of the present invention is a computer-implemented method as described above or as described above as preferred, wherein the at least one constraint comprises at least one personal constraint, wherein the at least one personal constraint is unique to each of the at least one subject, and wherein the at least one personal constraint is preferably determined based on a plurality of poses for the subject determined over a period of time.

The above-described aspect of the present invention has the advantage of increasing the accuracy of the estimated pose by taking into account constraints that are personal and unique to each subject. The above-described aspect of the present invention also has the advantage of determining the at least one personal constraint automatically based on past pose estimations without the provision of the at least one personal constraint.

A preferred method of the present invention is a computer-implemented method as described above or as described above as preferred, wherein determining the pose of each of the at least one subject comprises:

> selecting, from the generated one or more combinations of human keypoints, one or more combinations of human keypoints that fit the at least one constraint; and
> optionally, for each human keypoint, selecting the candidate position with the highest probability that the human keypoint is located, wherein the candidate position is selected from the selected one or more combinations of human keypoints that fit the at least one constraint.

The above-described aspect of the present invention has the advantage that the positions of human keypoints selected are those that meet the predefined constraints and have the highest probability.

A preferred method of the present invention is a computer-implemented method as described above or as described above as preferred, wherein determining the pose of each of the at least one subject comprises calculating, for each of the generated one or more combinations of human keypoints, a value based on a function that maximises a probability that the human keypoint occurs and a fit to the at least one constraint, wherein the detected pose of the subject is the combination with the highest calculated value.

The above-described aspect of the present invention has the advantage that the probability that the human keypoint occurs and the at least one constraint are both accounted for such that the determined pose may be more accurate.

A preferred method of the present invention is a computer-implemented method as described above or as described above as preferred, wherein determining the pose of each of the at least one subject is further based on one or more vector fields encoding a location and orientation of limbs.

The above-described aspect of the present invention has the advantage that the method of pose estimation is more accurate when there are two or more subjects within the image frame.

A preferred method of the present invention is a computer-implemented method as described above or as described above as preferred, wherein determining the pose of each of the at least one subject comprises:

calculating, for each of the generated one or more combinations of human keypoints, a value based on a function that maximises a probability that the keypoint occurs and a fit to the at least one constraint; and

correcting the calculated values based on one or more vector fields encoding a location and orientation of limbs, wherein the detected pose of the subject is the combination with the highest corrected calculated value.

The above-described aspect of the present invention has the advantage that the method of pose estimation is more accurate when there are two or more subjects within the image frame.

A preferred method of the present invention is a computer-implemented method as described above or as described above as preferred, further comprising generating an alert based on the determined pose of each of the at least one subject.

The above-described aspect of the present invention has the advantage that by generating an alert, any unsafe behaviour may be corrected in order to increase the overall driving safety.

The above-described advantageous aspects of a computer-implemented method of the invention also hold for all aspects of a below-described in-cabin method of the invention. All below-described advantageous aspects of an in-cabin method of the invention also hold for all aspects of an above-described computer-implemented method of the invention.

The invention also relates to an in-cabin method of monitoring at least one subject inside a vehicle cabin, the method comprising performing of a computer-implemented method according to any of the preceding claims, wherein the imaging device is arranged to image at least one subject inside a vehicle cabin.

The above-described advantageous aspects of a computer-implemented method or in-cabin method of the invention also hold for all aspects of a below-described system of the invention. All below-described advantageous aspects of a system of the invention also hold for all aspects of an above-described computer-implemented method or in-cabin method of the invention.

The invention also relates to a system comprising an imaging device, one or more processors and a memory that stores executable instructions for execution by the one or more processors, the executable instructions comprising instructions for performing a method of the invention.

The above-described advantageous aspects of a computer-implemented method, in-cabin method, or system of the invention also hold for all aspects of a below-described vehicle of the invention. All below-described advantageous aspects of a vehicle of the invention also hold for all aspects of an above-described computer-implemented method, in-cabin method, or system of the invention.

The invention also relates to a vehicle comprising a system of the invention, wherein the imaging device is positioned to image at least one subject inside the vehicle.

The above-described advantageous aspects of a computer-implemented method, in-cabin method, system, or vehicle of the invention also hold for all aspects of below-described computer program, a machine-readable storage medium, or a data carrier signal of the invention. All below-described advantageous aspects of a computer program, a machine-readable storage medium, or a data carrier signal of the invention also hold for all aspects of an above-described computer-implemented method, training dataset, graph representation, uses of the graph representation, or system of the invention.

The invention also relates to a computer program, a machine-readable storage medium, or a data carrier signal that comprises instructions, that upon execution on a data processing device and/or control unit, cause the data processing device and/or control unit to perform the steps of a computer-implemented method according to the invention. The machine-readable medium may include any medium and/or mechanism for storing or transmitting information in a form readable by a machine (e.g., a computing device). The machine-readable medium may be any medium, such as for example, read-only memory (ROM); random access memory (RAM); a universal serial bus (USB) stick; a compact disc (CD); a digital video disc (DVD); a data storage device; a hard disk; electrical, acoustical, optical, or other forms of propagated signals (e.g., digital signals, data carrier signal, carrier waves), or any other medium on which a program element as described above can be transmitted and/or stored.

As used in this summary, in the description below, in the claims below, and in the accompanying drawings, the term "vehicle" refers to any mobile agent capable of movement, including cars, trucks, buses, agricultural machines, forklift, robots, wherein such mobile agent is capable of carrying or transporting humans, whether or not such mobile agent is autonomous or human-operated.

As used in this summary, in the description below, in the claims below, and in the accompanying drawings, the term "keypoint" or "human keypoint" refer to interest points or key locations in an image that are generally indicative of unique and/or important locations of the human body, such as facial landmarks (eyes, etc.), joints (elbow, knees, hips, etc.), hands and feet, etc.

BRIEF DESCRIPTION OF THE DRAWINGS

These and other features, aspects, and advantages will become better understood with regard to the following description, appended claims, and accompanying drawings where:

> Fig. 1A is a simplified functional block diagram of a system for pose estimation, in accordance with embodiments of a present disclosure;

> Fig. 1B is a simplified hardware block diagram of the system, according to embodiments of the present disclosure;

> Fig. 2 shows a flow chart of a method for pose estimation, in accordance with embodiments of the present disclosure;

> Fig. 3 is a schematic illustration of examples of human keypoints that may be determined, in accordance with embodiments of the present disclosure; and

> Fig. 4 is a schematic illustration of a method of determining one or more candidate positions of human keypoints, in accordance with embodiments of the present disclosure.

In the drawings, like parts are denoted by like reference numerals.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

DETAILED DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

In the present document, the word "exemplary" is used herein to mean "serving as an example, instance, or illustration." Any embodiment or implementation of the present subject matter described herein as "exemplary" is not necessarily be construed as preferred or advantageous over other embodiments.

The term "coupled" (or "connected") herein may be understood as electrically coupled, as communicatively coupled, for example to receive and transmit data wirelessly or through wire, or as mechanically coupled, for example attached or fixed, or just in contact without any fixation, and it will be understood that both direct coupling or indirect coupling (in other words: coupling without direct contact) may be provided.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

The present disclosure is directed to methods, systems, vehicles, computer programs, machine-readable storage media, and data carrier signals, for human pose estimation, wherein such human pose estimation accounts for at least one constraint affecting the poses that a subject can take. Embodiments of the present invention improve pose estimation inside a vehicle by incorporating physical, spatial, and/or temporal constraints with a pose estimation algorithm, such as limb length, limb movement and limb angles.

The following description sets forth exemplary methods, parameters, and the like. It should be recognized, however, that such description is not intended as a limitation on the scope of the present disclosure but is instead provided as a description of exemplary embodiments.

The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. The terms "comprises", "comprising", "includes" or any other variations thereof, are intended to cover a non-exclusive inclusion, such that a setup, device or method that includes a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method. It must also be noted that as used herein and in the appended claims, the singular forms "a," "an," and "the" include plural references unless the context clearly dictates otherwise.

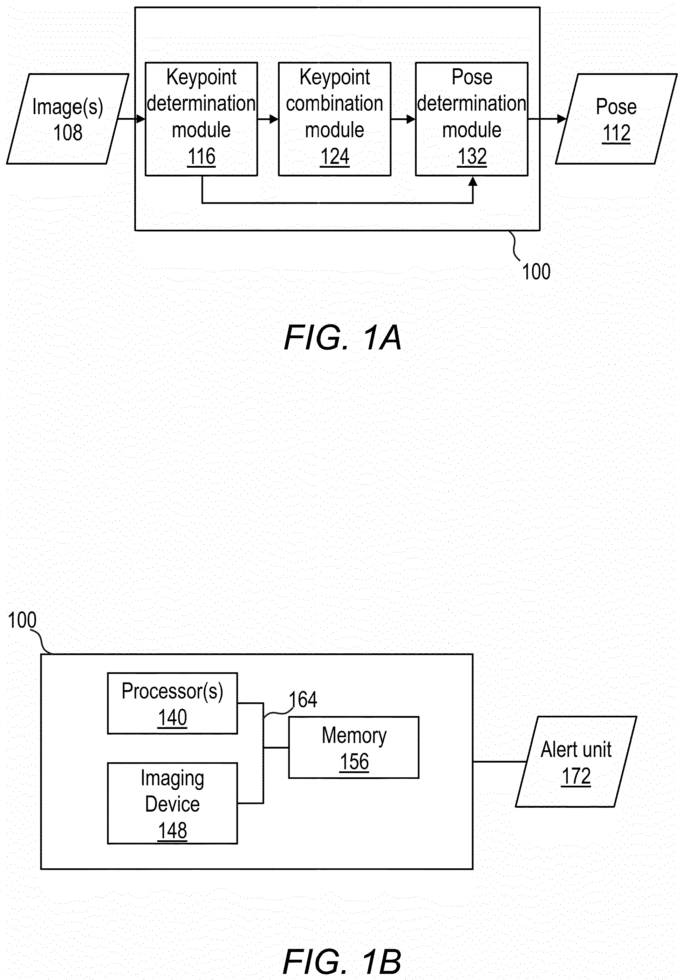

Fig. 1A is a simplified functional block diagram of a system 100 for pose estimation, in accordance with embodiments of a present disclosure. System 100 for pose estimation may be used in a vehicle, e.g., for in-cabin monitoring of subjects/persons within the vehicle cabin. In some embodiments, system 100 may be configured to receive at least one image frame 108 of at least one subject or person and to output a pose 112 for each subject or person captured in the received at least one image frame 108. In some embodiments, the at least one image frame 108 may be captured by an imaging device 148 (see Fig. 1B) arranged to image at least one subject. In some embodiments, system 100 for pose estimation may comprise a keypoint determination module 116, the keypoint determination module 116 configured to receive at least one image frame 108 of at least one subject or person. In some embodiments, the keypoint determination module 116 may be configured to determine one or more candidate positions for each of a plurality of human keypoints, wherein each candidate position is associated with a probability that a human keypoint is located at such position. Human keypoints are generally indicative of unique and/or important locations of the human body, such as eyes, joints (elbow, knees, hips, etc.), hands and feet, etc. In some embodiments, the keypoint determination module 116 may be further configured to determine one or more vector fields encoding a location and orientation of limbs identified within image frame 108. It is contemplated that keypoint determination module 116 may use any known algorithm or model to identify human keypoints and/or one or more vector fields encoding a location and orientation of limbs.

According to some embodiments, system 100 may comprise a keypoint combination module 124, the keypoint combination module 124 configured to receive input from the keypoint determination module 116. In some embodiments, keypoint combination module 124 may be configured to generate one or more combinations of human keypoints based on the one or more candidate positions of human keypoints determined by keypoint determination module 116. In some embodiments, each combination of human keypoints may comprise one of each of the plurality of human keypoints, wherein each human keypoint is located at one of the one or more candidate positions determined by keypoint determination module 116 for such human keypoint. It is contemplated that keypoint combination module 124 may generate the one or more combinations of human keypoints using any known algorithm or model.

According to some embodiments, system 100 may comprise a pose determination module 132, the pose determination module 132 configured to receive input from the keypoint combination module 124 and/or keypoint determination module 116. In some embodiments, the pose determination module 132 may be configured to determine a pose of each of the at least one subject based at least on the one or more generated combinations of human keypoints. In some embodiments, the pose determination module 132 may be further configured to determine the pose of each of the at least one subject based on at least one constraint affecting the pose of each of the at least one subject. In some embodiments, pose determination module 132 may be further configured to determine the pose of each of the at least one subject further based on one or more vector fields encoding a location and orientation of limbs.

Fig. 1B is a simplified hardware block diagram of the system 100, according to embodiments of the present disclosure. System 100 may comprise at least one processor 140. In some embodiments, system 100 may comprise an imaging device 148. In some embodiments, the imaging device 148 may be a camera or a video camera. In some embodiments, the imaging device 148 may be arranged to image at least one subject and capture at least one image frame 108 of at least one subject or person. In some embodiments, the imaging device 148 may be installed on a vehicle and arranged to image at least one subject inside the vehicle cabin. In some embodiments, the at least one processor 140 may be configured to carry out the functions of at least one of the keypoint determination module 116, the keypoint combination module 124, and the pose determination module 132. In some embodiments, system 100 may comprise at least one memory 156. The at least one memory 156 may include a non-transitory computer-readable medium. In some embodiments, the at least one processor 140, the imaging device 148 and the at least one memory 156 may be coupled to one another, for example, mechanically or electrically, via the coupling line 164.

According to some embodiments, system 100 may be further coupled to an alert unit 172 that is configured to generate an alert based on the pose 112 determined by system 100. System 100 may be coupled to alert unit 172 by manner of one or both of wired or wireless coupling. In some embodiments, the alert may be generated for a driver or occupant of the vehicle and/or a third-party service provider For example, where the pose 112 determined by system 100 indicates that a driver's hands are not on a steering wheel, or that a driver's head is not facing forward, the alert unit 172 may generate an alert to call for the driver's attention. For example, where the pose 112 determined by system 100 indicates that a subject's pose has remained unchanged for a period of time, or indicates an unusual behaviour, the alert unit 172 may generate an alert to the driver and/or third-party service provider to indicate a possibility of an unusual situation or an emergency, so that further actions may be taken. In some embodiments, the alert unit 172 may generate alerts in the form of a visual, auditory or tactile alert. Examples include an audible alarm or voice notification, a visible notification on a dashboard display, or a vibration.

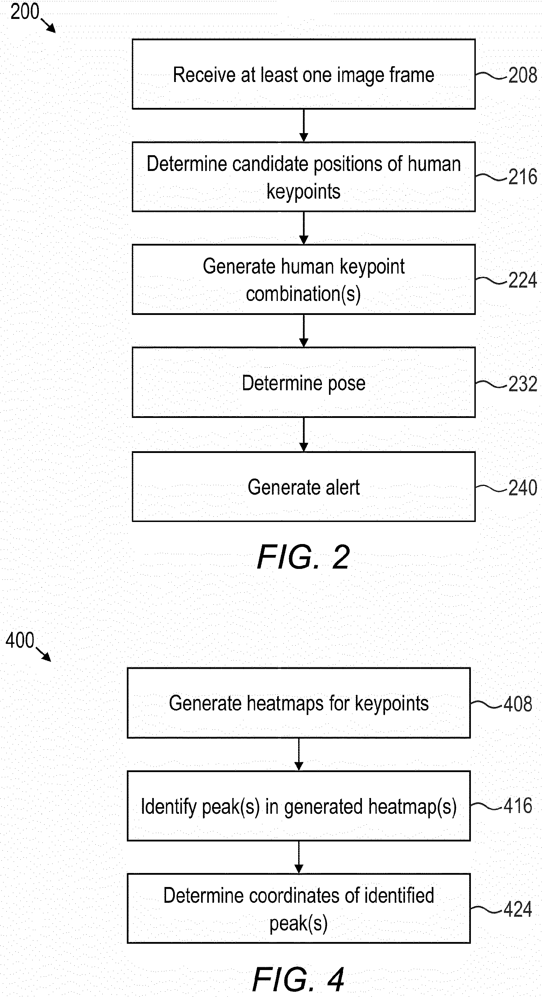

Fig. 2 shows a flow chart of a method 200 for pose estimation, in accordance with embodiments of the present disclosure. Method 200 of for pose estimation may be implemented by any architecture and/or computing system. For example, various architectures employing, for example, multiple integrated circuit (IC) chips and/or packages, and/or various computing devices and/or consumer electronic (CE) devices such as multifunction devices, tablets, smart phones, etc., may implement the techniques and/or arrangements described herein. In some embodiments, method 200 may be carried out by system 100. In some embodiments, method 200 may be employed for in-cabin monitoring of at least one subject inside a vehicle cabin.

According to some embodiments, method 200 for pose estimation may comprise step 208 wherein at least one image frame 108 capturing at least one subject is received. The at least one image frame 108 may be captured by an imaging device 148. The at least one image frame 108 may be received by manner of one or both of wired or wireless coupling or communication to the imaging device 148. In some embodiments, the at least one image frame 108 may be received from the imaging device 148 through a communication network. In other embodiments, the at least one image frame 108 may be captured by imaging device 148 and stored on one or more remote storage devices and the at least one image frame 108 may be retrieved from such remote storage device, or a cloud storage site, through one or both of wired or wireless connection.

According to some embodiments, method 200 may comprise step 216 wherein one or more candidate positions are determined for each of a plurality of human keypoints. In some embodiments, step 216 may be carried out by keypoint determination module 116. In some embodiments, each candidate position of a human keypoint may be associated with a probability or probability that a human keypoint is located at such position. In some embodiments, step 216 may optionally comprise determining one or more vector fields encoding a location and orientation of limbs. Step 216 may be carried out using any known algorithm or model used to identify human keypoints and/or one or more vector fields encoding a location and orientation of limbs in an image.

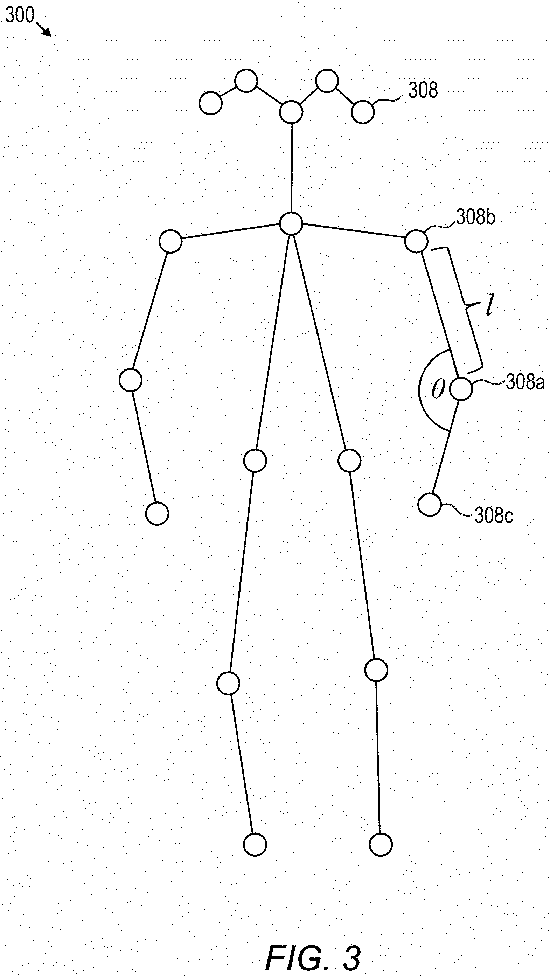

Fig. 3 is a schematic illustration of examples of human keypoints that may be determined, in accordance with embodiments of the present disclosure. A plurality of human keypoints 308 may be identified for a person 300. For example, human keypoint 308a may represent a left elbow of person 300, human keypoint 308b may represent a left shoulder of person 300, and human keypoint 308c may represent a left hand of person 300. It is emphasised that the human keypoints 308 identified in Fig. 3 are examples, and any number of human keypoints or types of human key points may be determined.

Fig. 4 is a schematic illustration of a method of determining one or more candidate positions of human keypoints, in accordance with embodiments of the present disclosure. In some embodiments, method 400 of determining one or more candidate positions of human keypoints may be carried out at step 216 of method 200. In some embodiments, method 400 of determining one or more candidate positions of human keypoints may be carried out by keypoint determination module 116.

According to some embodiments, method 400 of determining one or more candidate positions of human keypoints may comprise step 408 wherein heatmaps are generated for the plurality of human keypoints, wherein each heatmap represents a probability that a human keypoint occurs at each pixel location. The heatmaps may be generated using any known pose estimation algorithms or models. In some embodiments, a neural network may be used to determine one or more candidate positions of human keypoints. In some embodiments, a convolutional neural network (CNN) may be used to determine one or more candidate positions of human keypoints. An example of a model that may be used in step 408 is the pretrained Qualcomm pose estimation model available at https://github.com/quic/aimet-model-zoo/blob/develop/zoo_tensorflow/Docs/PoseEstimation.md, wherein the model was pretrained on the images of persons with labelled keypoints from the Coco dataset available at https://cocodataset.org/. The Qualcomm pose estimation model outputs heatmaps which represent a probability that a particular human keypoint occurs at each pixel location, as well as part affinity fields which are vector fields encoding a location and orientation of limbs and represent connections between keypoints. An example of the architecture and training of the Qualcomm pose estimation model may be found in "Realtime Multi-Person 2D Pose Estimation using Part Affinity Fields" by Cao *et. al*. An example of training parameters could be using AdamOptimiser with a learning rate of 0.001, mini batch size of 16 at 10 epochs. It is contemplated that any other suitable pose estimation algorithm or model may be employed.

According to some embodiments, method 400 may comprise step 416 wherein one or more peaks are identified in each heatmap generated in step 408. In some embodiments, the one or more peaks identified may be local peaks as each heatmap generated may have multiple local peaks. Any peak identification algorithm may be employed to identify the one or more peaks. For example, the Fast 2D peak finder described at https://www.mathworks.com/matlabcentral/fileexchange/37388-fast-2d-peak-finder may be used to identify the one or more peaks. It is contemplated that any other suitable peak identification algorithm may be employed.

According to some embodiments, method 400 may comprise step 424 wherein the coordinates of the one or more peaks identified in step 416 are determined. In some embodiments, each coordinate determined in step 424 represents a candidate position of the corresponding human keypoint. In some embodiments, the coordinates may be expressed as $(x, y)$, wherein x represents an x-coordinate and $y$ represents a y-coordinate.

Returning to Fig. 2, according to some embodiments, method 200 may comprise step 224, wherein one or more combinations of human keypoints are generated based on the one or more candidate positions determined in step 216. In some embodiments, step 224 may be carried out by a keypoint combination module 124. In some embodiments, each combination of human keypoints may comprise one of each of the plurality of human keypoints 308, wherein each of the plurality of human keypoints 308 is located at one of the one or more candidate positions determined in step 216 for each of the plurality of human keypoints 308. It is contemplated that any known algorithm or model may be used to generate the one or more combinations of human keypoints.

According to some embodiments, method 200 may comprise step 232 wherein a pose is determined for each of the at least one subject based at least on the one or more combinations of human keypoints generated in step 224. In some embodiments, step 232 may be carried out by a pose determination module. In some embodiments, pose may be determined for each of the at least one subject may be further based on at least one constraint affecting the pose of each of the at least one subject. In some embodiments, the at least one constraint may comprise a physical constraint, a spatial constraint, a temporal constraint, or some combination thereof. In some embodiments, the at least one constraint comprises at least one of: limb length, limb angle, and limb movement. In some embodiments, the at least one constraint may be a generic constraint or a personal constraint. In some embodiments, the generic constraint may be determined based on a dataset comprising a general or specific population. An example of a specific population is a driver population. In some embodiments, a personal constraint may be determined based on the specific constraints unique to each subject. In some embodiments, the personal constraints may be provided to system 100 for calculation in method 200. In some embodiments, the personal constraints may be determined based on a plurality of poses for the subject determined over a period of time, or on the fly. In some embodiments, where a convolutional neural network is used to implement method 200, step 232 may be implemented as a maximisation operation over the final layers. In contrast with existing methods that seek

$$\underset{i,j}{argmax}\, L_k(i,j)$$ where $L_k$ represents k-th final layer, and $i$ and $j$ represent the coordinates of each pair of human keypoints, method 200 seeks for $$\sum_k \underset{i_k,j_k}{argmax}\, L_k(i_k,j_k) + Constraints$$ which entangle $i$, $j$ and k.

According to some embodiments, the at least one constraint may comprise a limb length. Limb length is the distance between a position of a first keypoint and a second keypoint, wherein the two keypoints are connected to each other. In some embodiments, limb length may be a Euclidian distance between any two human keypoints. In some embodiments, limb length may be expressed with the equation of $l = \|p_n - p_o\|$, wherein $l$ is the limb length between a first keypoint $m$ and second keypoint $n$, and $p$ refers to the position or coordinates $(x,y)$ of each keypoint $m$ and $n$. For example, as illustrated in Fig. 3, limb length $l$ may be determined by calculating the distance between keypoint 308a and 308b. In some embodiments, the limb length constraint may be expressed as a range, for example as $l_i^{min} \leq l_i \leq l_i^{max}$, wherein $l_i$ represents the limb length of limb $i$, $l_i^{min}$ represents the lower length limit of limb $i$, and $l_i^{max}$ represents the upper length limit of limb $i$. In some embodiments, $l_i^{min}$ and $l_i^{max}$ may be determined based on generic measurements from a general or specific population. In some embodiments, $l_i^{min} = \alpha^{Generic} L_i^{Generic}$ and $l_i^{max} = \beta^{Generic} L_i^{Generic}$ where $\alpha^{Generic} \in [0.35, 0.65]$, $\beta^{Generic} \in [1.25, 1.75]$ and $L_i^{Generic}$ is calculated by averaging all corresponding limb lengths in a population. In some embodiments, the population may be a general population. In some embodiments, the population may be a subset of a general population or a specific population. An example of a dataset of a population that may be used to determine the generic limb length is the Coco dataset available at https://cocodataset.org/#home which comprises the data of 250,000 people with keypoints. In some embodiments, $l_i^{min}$ and $l_i^{max}$ may be determined based on the limb length of the specific subject. In some embodiments, $l_i^{min} = \alpha^{Person} L_i^{Person}$ and $l_i^{max} = \beta^{Person} L_i^{Person}$, where $\alpha^{Person} \in [0.1, 0.3]$, $\beta^{Person} \in [1.2, 1.5]$ and $L_i^{Person}$ is provided or obtained by averaging the limb length of the subject calculated for all image frames containing the specific subject.

According to some embodiments, the at least one constraint may comprise a limb angle. Limb angle represents the orientation of a first limb in relation to a second limb, wherein the first limb and the second limb are joined together by a human keypoint. In some embodiments, the limb angle within three human keypoints may be calculated via triangle function. In some embodiments, limb angle may be expressed with the equation $\theta_b = \overrightarrow{p_a p_b} \angle \overrightarrow{p_b p_c}$, where $\theta_b$ is the limb angle at human keypoint $b$, $p$ refers to the position or coordinates $(x,y)$ of each keypoint $a$, $b$, and $c$, where keypoints $a$ and $b$ are connected and keypoints $b$ and $c$ are connected. For example, as illustrated in Fig. 3, limb angle $\theta$ may be determined based on a distance between keypoint 308b and 308a, a distance between keypoint 308a and keypoint 308c, and a distance between keypoint 308b and 308c. In some embodiments, the limb angle constraint may be expressed as a range, for example as $\theta_j^{min} \leq \theta_j \leq \theta_j^{max}$, where $\theta_j$ is the limb angle at human keypoint $j$, $\theta_j^{min}$ represents the lower angle limit of keypoint $j$, and $\theta_j^{max}$ represents the upper angle limit of keypoint $j$. In some embodiments, $\theta_j^{min}$ and $\theta_j^{max}$ may be determined based on generic measurements from a general or specific population. In some embodiments, $\theta_j^{min}$ and $\theta_j^{max}$ may be determined based on the limb angle distribution over a general or specific population. In some embodiments, $\theta_j^{min}$ and $\theta_j^{max}$ may be obtained as a quantile distribution of $\theta_j$ over a population. For example, the quantile for $\theta_j^{min}$ may be between 0.3 and 0.6, while the quantile for $\theta_j^{max}$ may be between 0.93 to 0.97. In some embodiments, $\theta_j^{min}$ and $\theta_j^{max}$ may be obtained as the 0.5 quantile and 0.95 quantile respectively of $\theta_j$ distribution. In some embodiments, the population may be a general population. In some embodiments, the population may be a subset of a general population or a specific population. An example of a dataset of a population that may be used to determine the distribution of the generic limb angle is the Coco dataset available at https://cocodataset.org/#home which comprises the data of 250,000 people with keypoints. In some embodiments, $\theta_i^{min}$ and $\theta_i^{max}$ may be determined based on the limb angles of the specific subject. In some embodiments, $\theta_i^{min}$ and $\theta_i^{max}$ may be provided or may be obtained based on the limb angle of the subject calculated for all image frames containing the specific subject.

According to some embodiments, the at least one constraint may comprise a limb movement. Limb movement represents is based on a maximum movement of each limb between image frames. In some embodiments, the maximum movement of each limb may be expressed as For example, the limb movement may be expressed with the equation $(\delta\theta_{max}, \delta l_{max})$, wherein $\delta\theta_{max}$ represents a maximum difference of angles between two frames, and $\delta l_{max}$ represents a maximum difference of limb lengths between two image frames. In some embodiments, $\delta l = l_i^{frame+1} - l_i^{frame}$ and $\delta\theta = \theta_i^{frame+1} - \theta_i^{frame}$. In some embodiments, the maximum movement of each limb $(\delta\theta_{max}, \delta l_{max})$, may be determined based on generic measurements from a general or specific population. In some embodiments, the maximum movement of each limb $(\delta\theta_{max}, \delta l_{max})$, may be obtained as a quantile of distribution of $\delta\theta$ and $\delta l$ respectively over a population. For example, the quantile for both $\delta\theta_{max}$ and $\delta l_{max}$ may be between 0.93 to 0.97. In some embodiments, both $\delta\theta_{max}$ and $\delta l_{max}$ may be obtained as the 0.95 quantile of $\delta\theta$ and $\delta l$ distribution respectively. In some embodiments, the quantile for $\delta\theta_{max}$ and $\delta l_{max}$ may be different. In some embodiments, the quantile for $\delta\theta_{max}$ and $\delta l_{max}$ may be the same. In some embodiments, the population may be a subset of a general population or a specific population. An example of a dataset of a general population that may be used to determine the distribution of $\delta\theta$ and $\delta l$ is the BBC Pose or Extended BBC Pose datasets of the VGG pose estimation dataset available at https://www.robots.ox.ac.uk/~vgg/data/pose/. An example of a dataset of a specific population that may be used to determine the distribution of $\delta\theta$ and $\delta l$ is the DriPE dataset available at https://gitlab.liris.cnrs.fr/aura_autobehave/dripe which comprises images of human drivers with keypoint annotations. More information on the DriPE dataset may be found in "DriPE: A Dataset for Human Pose Estimation in Real-World Driving Settings" by Guesdon *et. al.* It is contemplated that any other appropriate video dataset may be employed. According to some embodiments, if the frame rate of the imaging device in system 100 is different from the dataset used to determine the distribution of $\delta\theta$ and $\delta l$, $\delta\theta_{max}$ and $\delta l_{max}$ may be adjusted, for example by multiplying it to $\frac{imaging\ device\ frame\ rate}{dataset\ frame\ rate}$, wherein imaging device frame rate corresponds to the frame rate of imaging device 148 and dataset frame rate corresponds to the frame rate of the dataset used.

According to some embodiments, step 232 may comprise a sequential set of steps. In such an embodiment, step 232 may commence with selecting, from the one or more combinations of human keypoints generated in step 224, one or more combinations that fit the at least one constraint. In situations where only one combination of human keypoints generated fit the at least one constraint, the combination of human keypoints is the determined pose. In situations where a plurality of combinations of human keypoints generated in step 224 fit the at least one constraint, step 232 may further comprise selecting, for each human keypoint, the candidate position with the highest probability that the human keypoint is located, wherein the candidate position is selected from the selected one or more combinations that fit the at least one constraint. In such situations, the combination of selected positions of keypoints comprises the determined pose. In such an embodiment, the constraints and the probability are accounted for sequentially.

According to some embodiments, step 232 may comprise a single step, which comprises calculating a value based on a function that maximises a probability that the human keypoint occurs and a fit to the at least one constraint. Preferably, the function simultaneously maximises a probability that the human keypoint occurs and a fit to the at least one constraint. In such embodiments, the at least one constraint is incorporated as a regularisation in an objective function. In some embodiments, the objective function that maximises a probability that the human keypoint occurs and a fit to the at least one constraint may be expressed as Equation (1) as follows:

$$Obj = \sum_{i=1}^{N} c_i + \gamma\, \sigma_l \sum_{i=1}^{N_l} \max\left(l_i^{min} - l_i, l_i - l_i^{max}\right) + \delta\, \sigma_\theta \sum_{i=1}^{N_\theta} \max\left(\theta_i^{min} - \theta_i, \theta_i - \theta_i^{max}\right)$$

$$+ \kappa\, \sigma_{f\theta} \sum_{i=1}^{N_\theta} \left(\theta_i^{frame+1} - \theta_i^{frame}\right) + \eta\, \sigma_{l\theta} \sum_{i=1}^{N_l} \left(l_i^{frame+1} - l_i^{frame}\right) \qquad (1)$$

where $N_l$ and $N_\theta$ are respectively the numbers of limbs and keypoints, $c_i$ are confidence values or probability associated with each keypoint, $\sigma_l$ and $\sigma_\theta$ are ratios of second term expectations to first term expectations over the population of the dataset and $\gamma, \delta, \kappa, \eta \in (0.15, 0.35)$, and where

$$\sigma_l = \frac{\mathbb{E}\left(\sum_{i=1}^{N} c_i\right)}{\mathbb{E}\left(\sum_{i=1}^{N_l} \max\left(l_i^{min} - l_i, l_i - l_i^{max}\right)\right)}$$

$$\sigma_\theta = \frac{\mathbb{E}\left(\sum_{i=1}^{N} c_i\right)}{\mathbb{E}\left(\sum_{i=1}^{N_\theta} \max\left(\theta_i^{min} - \theta_i, \theta_i - \theta_i^{max}\right)\right)}$$

$$\sigma_{f\theta} = \frac{\mathbb{E}\left(\sum_{i=1}^{N} c_i\right)}{\mathbb{E}\left(\sum_{i=1}^{N_\theta} \left(\theta_i^{frame+1} - \theta_i^{frame}\right)\right)}$$

$$\sigma_{l\theta} = \frac{\mathbb{E}\left(\sum_{i=1}^{N} c_i\right)}{\mathbb{E}\left(\sum_{i=1}^{N_l} \left(l_i^{frame+1} - l_i^{frame}\right)\right)}$$

According to some embodiments, step 232 wherein a pose is determined for each of the at least one subject may be further based on one or more vector fields encoding a location and orientation of limbs. In some embodiments, the one or more vector fields encoding a location and orientation of limbs may be determined by a Qualcomm pose estimation model as referenced above in relation to step 216, wherein the one or more vector fields are termed as "part affinity fields" in relation to the Qualcomm pose estimation model. In such embodiments, step 232 of determining the pose of each of the at least one subject comprises calculating, for each of the generated one or more combinations of human keypoints, a value based on a function that maximises a probability that the keypoint occurs and a fit to the at least one constraint; and correcting the calculated values based on one or more vector fields encoding a location and orientation of limbs, wherein the detected pose of the subject is the combination with the highest corrected calculated value. In some embodiments, the function employed may be expressed as Equation (1) as described above. In some embodiments, correcting the calculated values may comprise generating a sum of normalised angles between the vectors for every possible limb connection between keypoints. In some embodiments, the calculated values may be corrected to account for orientation of the limbs.

According to some embodiments, method 200 may comprise step 240 wherein an alert is generated based on the pose determined in step 232. The alert may be generated by alert unit 172. In some embodiments, the alert may be generated for a driver or occupant of the vehicle and/or a third-party service provider.

Finally, the language used in the specification has been principally selected for readability and instructional purposes, and it may not have been selected to delineate or circumscribe the inventive subject matter. Accordingly, the embodiments of the present invention are intended to be illustrative, but not limiting, of the scope of the invention. The invention is defined by the appended claims.

**Claims**

1. A computer-implemented method for pose estimation, the method comprising:

    receiving at least one image frame captured by an imaging device, wherein the imaging device is arranged to capture the at least one image of the at least one subject;
    determining, by way of a keypoint determination module, one or more candidate positions of a plurality of human keypoints of the at least one subject captured in the at least one image frame, wherein each candidate position is associated with a probability that a human keypoint is located at such position;
    generating, by way of the keypoint determination module, one or more combinations of human keypoints based on the determined one or more candidate positions; and
    determining, by way of a pose estimation module, a pose of the at least one subject captured in the at least one image based at least on the one or more generated combinations of human keypoints,
    determining a pose of the at least one subject is further based on at least one constraint affecting the pose of each of the at least one subject, wherein the at least one constraint preferably comprises at least one of: limb length, limb angle, and limb movement, wherein
    determining the pose of the at least one subject comprises calculating, for each of the generated one or more combinations of human keypoints, a value based on a function that maximises a probability that the human keypoint occurs and a fit to the at least one constraint, wherein the detected pose of the subject is the combination with the highest calculated value.

2. The computer-implemented method of claim 1, wherein determining one or more candidate positions for each of a plurality of human keypoints comprises:

    generating heatmaps for each of the plurality of human keypoints, wherein each heatmap represents a probability that a human keypoint occurs at each pixel location;
    identifying one or more peaks in each generated heatmap; and
    determining coordinates of each identified peak, wherein each coordinate represents a candidate position of the corresponding human keypoint.

3. The computer-implemented method of claim 1 - 2 , wherein the at least one constraint comprises limb movement, wherein limb movement is based on a maximum movement of each limb between image frames.

4. The computer-implemented method of claim 1 - 3, wherein the at least one constraint comprises at least one generic constraint, wherein the generic constraint is preferably determined based on a dataset comprising a general or specific population.

5. The computer-implemented method of any of claims 1 to 4, wherein the at least one constraint comprises at least one personal constraint, wherein the at least one personal constraint is unique to each of the at least one subject, and wherein the at least one personal constraint is preferably determined based on a plurality of poses for the subject determined over a period of time.

6. The computer-implemented method of any of claims 1-5, wherein determining the pose of each of the at least one subject comprises:

    selecting, from the generated one or more combinations of human keypoints, one or more combinations of human keypoints that fit the at least one constraint; and
    optionally, for each human keypoint, selecting the candidate position with the highest probability that the human keypoint is located, wherein the candidate position is selected from the selected one or more combinations of human keypoints that fit the at least one constraint.

7. The computer-implemented method of any of claims 1-6, wherein determining the pose of each of the at least one subject is further based on one or more vector fields encoding a location and orientation of limbs.

8. The computer-implemented method of any of claims 1 -7, wherein determining the pose of each of the at least one subject comprises:

    calculating, for each of the generated one or more combinations of human keypoints, a value based on a function that maximises a probability that the keypoint occurs and a fit to the at least one constraint; and
correcting the calculated values based on one or more vector fields encoding a location and orientation of limbs,
wherein the detected pose of the subject is the combination with the highest corrected calculated value.

9. The computer-implemented method of any of the preceding claims, further comprising generating an alert based on the determined pose of each of the at least one subject.

10. An in-cabin method of monitoring at least one subject inside a vehicle cabin, the method comprising performing of a computer-implemented method according to any of the preceding claims, wherein the imaging device is arranged to image at least one subject inside a vehicle cabin.

11. A system comprising an imaging device, one or more processors and a memory that stores executable instructions for execution by the one or more processors, the executable instructions comprising instructions for performing a method according to any of the preceding claims.

12. A vehicle comprising the system of claim 11, wherein the imaging device is positioned to image at least one subject inside the vehicle.

13. A computer program that comprises instructions, that upon execution on a data processing device and/or control unit, cause the data processing device and/or control unit to perform the steps of a method according to any one of claims 1 to 10.

**Patentansprüche**

1. Computerimplementiertes Verfahren zum Posenschätzen, wobei das Verfahren Folgendes umfasst:

Empfangen mindestens eines von einer Abbildungsvorrichtung aufgenommenen Bildrahmens, wobei die Abbildungsvorrichtung dazu eingerichtet ist, dass sie das mindestens eine Bild des mindestens einen Subjekts aufnimmt;
Bestimmen, mittels eines Schlüsselpunktbestimmungsmoduls, einer oder mehrerer Kandidatenpositionen einer Vielzahl von menschlichen Schlüsselpunkten des mindestens einen in dem mindestens einen Bildrahmen erfassten Subjekts, wobei jede Kandidatenposition mit einer Wahrscheinlichkeit assoziiert ist, dass sich ein menschlicher Schlüsselpunkt an einer solchen Position befindet;
Generieren, mittels des Schlüsselpunktbestimmungsmoduls, einer oder mehrerer Kombinationen menschlicher Schlüsselpunkte basierend auf der bestimmten einen oder mehreren Kandidatenpositionen; und
Bestimmen, mittels eines Posenschätzmoduls, einer Pose des mindestens einen in dem mindestens einen Bild erfassten Subjekts mindestens basierend auf der einen oder mehreren generierten Kombinationen menschlicher Schlüsselpunkte, Bestimmen einer Pose des mindestens einen Subjekts basiert ferner auf mindestens einer Einschränkung, welche die Pose jedes des mindestens einen Subjekts beeinflusst, wobei die mindestens eine Einschränkung vorzugsweise mindestens eines von Folgendem umfasst: Extremitätenlänge, Extremitätenwinkel und Extremitätenbewegung, wobei
das Bestimmen der Pose des mindestens einen Subjekts für jede der erzeugten einen oder mehreren Kombinationen menschlicher Schlüsselpunkte Berechnen eines Wertes umfasst, basierend auf einer Funktion, die eine Wahrscheinlichkeit, dass der menschliche Schlüsselpunkt auftritt, und eine Übereinstimmung mit der mindestens einen Einschränkung maximiert, wobei die erfasste Pose des Subjekts die Kombination mit dem höchsten berechneten Wert ist.

2. Computerimplementiertes Verfahren nach Anspruch 1, wobei das Bestimmen einer oder mehrerer Kandidatenpositionen für jeden aus einer Vielzahl von menschlichen Schlüsselpunkten Folgendes umfasst:

Erzeugen von Heatmaps für jeden der Vielzahl von menschlichen Schlüsselpunkten, wobei jede Heatmap für eine Wahrscheinlichkeit steht, dass ein menschlicher Schlüsselpunkt an jedem Pixelort auftritt;
Identifizieren eines oder mehrerer Spitzenwerte in jeder erzeugten Heatmap; und
Bestimmen von Koordinaten jedes identifizierten Höchstwerts, wobei jede Koordinate für eine Kandidatenposition des entsprechenden menschlichen Schlüsselpunkts steht.

3. Computerimplementiertes Verfahren nach Anspruch 1-2, wobei die wenigstens eine Einschränkung Extremitätenbewegung umfasst, wobei die Extremitätenbewegung auf einer maximalen Bewegung jeder Extremität zwischen Bildrahmen basiert.

4. Computerimplementiertes Verfahren nach Anspruch 1-3, wobei die mindestens eine Einschränkung mindestens eine generische Einschränkung umfasst, wobei die generische Einschränkung vorzugsweise auf der Grundlage eines Datensatzes umfassend eine allgemeine oder spezifische Population bestimmt wird.

5. Computerimplementiertes Verfahren nach einem der Ansprüche 1 bis 4, wobei die mindestens eine Einschränkung mindestens eine persönliche Einschränkung umfasst, wobei die mindestens eine persönliche Einschränkung für jedes des mindestens einen Subjekts eindeutig ist, und wobei die mindestens eine persönliche Einschränkung vorzugsweise basierend auf einer Vielzahl von Posen für das Subjekt, die über einen Zeitraum bestimmt werden, bestimmt wird.

6. Computerimplementiertes Verfahren nach einem der Ansprüche 1-5, wobei das Bestimmen der Pose jedes des mindestens einen Subjekts Folgendes umfasst:

Auswählen, aus den erzeugten einen oder mehreren Kombinationen von menschlichen Schlüsselpunkten, einer oder mehrerer Kombinationen menschlicher Schlüsselpunkte, die mit der mindestens einen Einschränkung übereinstimmen; und

optional für jeden menschlichen Schlüsselpunkt, Auswählen der Kandidatenposition mit der höchsten Wahrscheinlichkeit, dass sich dort der menschliche Schlüsselpunkt befindet, wobei die Kandidatenposition aus der ausgewählten einen oder den ausgewählten mehreren Kombinationen menschlicher Schlüsselpunkte ausgewählt wird, die mit der mindestens einen Einschränkung übereinstimmen.

7. Computerimplementiertes Verfahren nach einem der Ansprüche 1-6, wobei das Bestimmen der Pose jedes des mindestens einen Subjekts ferner auf einem oder mehreren Vektorfeldern basiert, die eine Position und Ausrichtung von Extremitäten kodieren.

8. Computerimplementiertes Verfahren nach einem der Ansprüche 1-7, wobei das Bestimmen der Pose jedes des mindestens einen Subjekts Folgendes umfasst:

Berechnen, für jede der erzeugten einen oder mehreren Kombinationen menschlicher Schlüsselpunkte, eines Werts basierend auf einer Funktion, die eine Wahrscheinlichkeit, dass der Schlüsselpunkt auftritt, und eine Übereinstimmung mit der mindestens einen Einschränkung maximiert; und

Korrigieren der berechneten Werte basierend auf einem oder mehreren Vektorfeldern, die eine Position und Ausrichtung von Extremitäten kodieren, wobei die erfasste Pose des Subjekts die Kombination mit dem höchsten korrigierten berechneten Wert ist.

9. Computerimplementiertes Verfahren nach einem der vorhergehenden Ansprüche, ferner umfassend Erzeugen einer Benachrichtigung basierend auf der bestimmten Pose jedes des mindestens einen Subjekts.

10. Kabineninternes Verfahren zum Überwachen mindestens eines Subjekts innerhalb einer Fahrzeugkabine, wobei das Verfahren das Durchführen eines computerimplementierten Verfahrens nach einem der vorhergehenden Ansprüche umfasst, wobei die Abbildungsvorrichtung dazu eingerichtet ist, mindestens ein Subjekt innerhalb einer Fahrzeugkabine abzubilden.

11. System, umfassend eine Abbildungsvorrichtung, einen oder mehrere Prozessoren und einen Speicher, der ausführbare Anweisungen zur Ausführung durch den einen oder die mehreren Prozessoren speichert, wobei die ausführbaren Anweisungen Anweisungen zum Durchführen eines Verfahrens nach einem der vorhergehenden Ansprüche umfassen.

12. Fahrzeug, umfassend das System nach Anspruch 11, wobei die Abbildungsvorrichtung so positioniert ist, dass sie mindestens ein Subjekt innerhalb des Fahrzeugs abbildet.

13. Computerprogramm, das Anweisungen umfasst, die bei Ausführung auf einer Datenverarbeitungsvorrichtung und/oder Steuereinheit die Datenverarbeitungsvorrichtung und/oder Steuereinheit veranlassen, die Schritte eines Verfahrens nach einem der Ansprüche 1 bis 10 durchzuführen.

**Revendications**

1. Procédé d'estimation de pose mis en œuvre par ordinateur, le procédé comprenant :

la réception d'au moins une trame d'image capturée par un dispositif d'imagerie, dans lequel le dispositif d'imagerie est agencé pour capturer l'au moins une image de l'au moins un sujet ;
la détermination, à l'aide d'un module de détermination de points clés, d'une ou plusieurs positions candidates d'une pluralité de points clés humains de l'au moins un sujet capturé dans l'au moins une trame d'image, dans lequel chaque position candidate est associée à une probabilité qu'un point clé humain soit situé à une telle position ;
la génération, à l'aide du module de détermination de points clés, d'une ou plusieurs combinaisons de points clés humains sur la base de la position ou des positions candidates déterminées ; et
la détermination, à l'aide d'un module d'estimation de pose, d'une pose de l'au moins un sujet capturé dans l'au moins une image sur la base au moins de la combinaison ou des combinaisons de points clés humains générées, la détermination qu'une pose de l'au moins un sujet est en outre basée sur au moins une contrainte affectant la pose de chacun de l'au moins un sujet, dans lequel l'au moins une contrainte comprend de préférence au moins l'un parmi : une longueur de membre, un angle de membre et un mouvement de membre, dans lequel la détermination de la pose de l'au moins un sujet comprend le calcul, pour chacune de la combinaison ou des combinaisons de points clés humains générées, d'une valeur basée sur une fonction qui maximise une probabilité de survenue du point clé humain et une correspondance à l'au moins une contrainte, dans lequel la pose détectée du sujet est la combinaison avec la valeur calculée la plus élevée.

2. Procédé mis en œuvre par ordinateur selon la revendication 1, dans lequel la détermination d'une ou plusieurs positions candidates pour chacun d'une pluralité de points clés humains comprend :

la génération de cartes thermiques pour chacun de la pluralité de points clés humains, dans lequel chaque carte thermique représente une probabilité de survenue d'un point clé humain à chaque emplacement de pixel ;
l'identification d'un ou plusieurs pics dans chaque carte thermique générée ; et
la détermination des coordonnées de chaque pic identifié, dans lequel chaque coordonnée représente une position candidate du point clé humain correspondant.

3. Procédé mis en œuvre par ordinateur selon la revendication 1 ou 2, dans lequel l'au moins une contrainte comprend un mouvement de membre, dans lequel le mouvement de membre est basé sur un mouvement maximal de chaque membre entre les trames d'images.

4. Procédé mis en œuvre par ordinateur selon la revendication 1 à 3, dans lequel l'au moins une contrainte comprend au moins une contrainte générique, dans lequel la contrainte générique est de préférence déterminée sur la base d'un ensemble de données comprenant une population générale ou spécifique.

5. Procédé mis en œuvre par ordinateur selon l'une quelconque des revendications 1 à 4, dans lequel l'au moins une contrainte comprend au moins une contrainte personnelle, dans lequel l'au moins une contrainte personnelle est unique à chacun de l'au moins un sujet, et dans lequel l'au moins une contrainte personnelle est de préférence déterminée sur la base d'une pluralité de poses pour le sujet déterminées sur une période de temps.

6. Procédé mis en œuvre par ordinateur selon l'une quelconque des revendications 1 à 5, dans lequel la détermination de la pose de chacun de l'au moins un sujet comprend :

la sélection, parmi la ou les combinaisons de points clés humains générées, d'une ou plusieurs combinaisons de points clés humains qui correspondent à l'au moins une contrainte ; et
éventuellement, pour chaque point clé humain, la sélection de la position candidate avec la probabilité la plus élevée dans laquelle est localisé le point clé humain, dans lequel la position candidate est sélectionnée parmi la ou les combinaisons de points clés humains sélectionnées qui correspondent à l'au moins une contrainte.

7. Procédé mis en œuvre par ordinateur selon l'une quelconque des revendications 1 à 6, dans lequel la détermination de la pose de chacun de l'au moins un sujet est en outre basée sur un ou plusieurs champs vectoriels codant pour un emplacement et une orientation des membres.

8. Procédé mis en œuvre par ordinateur selon l'une quelconque des revendications 1 à 7, dans lequel la détermination de la pose de chacun de l'au moins un sujet comprend :

le calcul, pour chacune de la combinaison ou des combinaisons de points clés humains générées, d'une valeur basée sur une fonction qui maximise une probabilité de survenue du point clé et une correspondance à l'au moins une contrainte ; et
la correction des valeurs calculées sur la base d'un ou plusieurs champs vectoriels codant pour un emplacement et une orientation des membres,
dans lequel la pose détectée du sujet est la combinaison avec la valeur calculée corrigée la plus élevée.

9. Procédé mis en œuvre par ordinateur selon l'une quelconque des revendications précédentes, comprenant en outre la génération d'une alerte sur la base de la pose déterminée de chacun de l'au moins un sujet.

10. Procédé de surveillance en cabine d'au moins un sujet à l'intérieur d'une cabine de véhicule, le procédé comprenant l'exécution d'un procédé mis en œuvre par ordinateur selon l'une quelconque des revendications précédentes, dans lequel le dispositif d'imagerie est agencé pour imager au moins un sujet à l'intérieur d'une cabine de véhicule.

11. Système comprenant un dispositif d'imagerie, un ou plusieurs processeurs et une mémoire qui stocke des instructions exécutables destinées à être exécutées par le ou les processeurs, les instructions exécutables comprenant des instructions pour l'exécution d'un procédé selon l'une quelconque des revendications précédentes.

12. Véhicule comprenant le système selon la revendication 11, dans lequel le dispositif d'imagerie est positionné pour imager au moins un sujet à l'intérieur du véhicule.

13. Programme d'ordinateur qui comprend des instructions, qui, après exécution sur un dispositif de traitement de données et/ou une unité de commande, amènent le dispositif de traitement de données et/ou l'unité de commande à effectuer les étapes d'un procédé selon l'une quelconque des revendications 1 à 10.

*FIG. 1A*

*FIG. 1B*

200

| Receive at least one image frame | ⌐208 |

↓

| Determine candidate positions of human keypoints | ⌐216 |

↓

| Generate human keypoint combination(s) | ⌐224 |

↓

| Determine pose | ⌐232 |

↓

| Generate alert | ⌐240 |

*FIG. 2*

400

| Generate heatmaps for keypoints | ⌐408 |

↓

| Identify peak(s) in generated heatmap(s) | ⌐416 |

↓

| Determine coordinates of identified peak(s) | ⌐424 |

*FIG. 4*

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20140114741 A

- KR 20140114741